# EUROPEAN PATENT SPECIFICATION

(11) **EP 4 440 344 B1**
(45) Date of publication and mention of the grant of the patent: **09.07.2025**
(21) Application number: 23832801.7
(22) Date of filing: 14.12.2023
(51) Int. Cl.: A23P 20/10

(54) **EDIBLE AND SOLUBLE TRANSFER FILMS FOR THE DECORATION OF BEVERAGES AND FOODSTUFFS**
ESSBARE UND LÖSLICHE ÜBERTRÄGERFILME FÜR DAS DEKORIEREN VON GETRÄNKEN UND VON LEBENSMITTELN
FILMS DE TRANSFERT COMESTIBLES ET SOLUBLES POUR LA DECORATION DE BOISSONS ET DENREES ALIMENTAIRES

(30) Priority: 14.12.2022 US 202263432559 P
(43) Date of publication of application: 09.10.2024
(73) Proprietor: Sun Chemical B.V., 1382 LV Weesp (NL)
(72) Inventor: KENNEDY, Jeffrey, Amelia, Ohio 45102 (US); BALCH, Andrew, Somerset BA3 4RT (GB); WALLACE, Paul Andrew, Garden City Hertfordshire SG6 1BE (GB)
(74) Representative: Carpmaels & Ransford LLP
(86) International application number: PCT/GB2023/053238
(87) International publication number: WO 2024/127023

(56) References cited:
- WO-A1-2004/047556
- WO-A1-2022/087231
- DE-U1- 202009 002 679
- GB-A- 2 426 219
- JP-A- H10 215 792
- US-A1- 2018 228 202

## Description

### CROSS REFERENCE TO RELATED APPLICATION

This application claims priority from US application 63/432,559, entitled "Edible & Soluble Transfer Films for the Decoration of Beverages & Foodstuffs".

### FIELD OF THE INVENTION

The present invention relates to decorations for foodstuffs, wherein the decorations comprise an edible substrate and an edible image disposed on the edible substrate. The invention also relates to methods of making decorations for foodstuffs as well as methods of decorating foodstuffs.

### BACKGROUND OF THE INVENTION

It is difficult to directly print a lasting image from edible and food compliant inks onto the surface of foodstuffs, which can be curved or contoured objects, frozen, and/or goods that have just been baked and are in the cooling process, without some noticeable changes in the image quality. Typically, spreading of the inks occurs across the surface and very poor image quality results. Several methods have been developed for the use of substrates to transfer printed images to foodstuffs. However, each of these methods suffers from certain disadvantages.

### Background Documents:

US20180236801A1 relates to transferring a print, such as a logo, onto a food item. The method involves printing an image onto an inedible carrier medium, such as a plastic film, bringing the film into contact with the food object, heating up the object to facilitate transfer, and finally removing the insoluble and inedible plastic carrier.

WO2006043761A1 relates to a similar process to US20180236801A1, wherein an edible inkjet ink is used to create an image, for example a date stamp, on an inedible bottom plastic film, before covering the printed image with another film, applying the film to foodstuffs, and then heating at an elevated temperature to make the image adhere to the foodstuffs, which are typically frozen goods.

US20060275529A1 relates to slot coating an edible material onto a backing material to form an edible substrate, which is then in turn printed with an image. The edible substrate can then be applied to various food objects, including by applying the backing material and substrate to foodstuffs and then peeling away the backing material. The edible substrate is formed from mixtures of starches and other ingredients in very complex formulations, and can be decorated using, for example, printing. However, the substrates are not water soluble and thus the printed substrates remain on the surface of food objects after transfer. Accordingly, it is not possible to decorate foodstuffs with only the printed image using the method disclosed in this document, as the substrate itself is also visible on the surface of the foodstuffs.

AU1994072188A1 and WO951735A1 are related to the preparation of a decorated edible film which can be affixed to a food object like a transfer. The disclosed film is made from hydroxypropyl methylcellulose, which is water insoluble, and so remains on the surface of the food object and is not aesthetically pleasing. GB2426219A relates to a product comprising an amylaceous edible substrate, to a method of forming such a product and to a number of uses of such a product, particularly in the foodstuff decorating art. US2018/228202A1 relates to edible print substrates. WO2004/047556A1 relates to an adornment for a comestible product and particularly to a starch-based substrate having an image printed thereon and a method of manufacture of the printed starch-based substrate. DE202009002679U1 relates to a transparent and edible motif sticker for application to cakes and tarts as well as moist desserts.

In the above references, the substrates are inedible, such that the printed image has to be transferred from the substrate to the foodstuff and the substrate then removed. For example, the substrate may be peeled off the foodstuffs after the image has been transferred; a difficult process that can compromise the quality of the printed image on the foodstuffs. Alternatively, the substrates are edible but are water insoluble and may also be made from very complicated formulations. For example, the edible films of US20060275529A1 contain many ingredients, including colorants. Moreover, these edible substrates are insoluble in water and thus do not dissolve into the foodstuffs, such that the substrates remain visible on the foodstuffs after transfer. Moreover, the films of the prior art may need to be prepared using specific moulding and/or casting equipment.

The present invention addresses these problems in the art.

### SUMMARY OF THE INVENTION

The invention is defined by the appended claims. The invention provides a decoration for food stuffs comprising an edible substrate and an edible image disposed on the edible substrate. The edible substrate comprises a material selected from the group consisting of pectin, citric acid, citric acid esters, vegetable oil, collagen, and combinations thereof. The material selected from the group consisting of pectin, citric acid, citric acid esters, vegetable oil, collagen, and combinations thereof is present in the substrate in an amount of at least 50wt%, such as 50 to 95wt%, relative to the total weight of the non-water components of the substrate. The substrate has a water solubility of at least 70%, wherein water solubility is measured at 20 °C.

The invention further provides a method for providing a decoration for a foodstuff or beverage or a method for decorating a foodstuff or beverage, comprising:
a. applying a water-soluble, edible, liquid primer onto a temporary support medium;
b. drying the primer on the support medium to afford a substrate for use in the invention;
c. disposing an edible image onto the substrate; and
d. drying the printed edible image to afford a decoration according to the invention.

The method of the invention may further comprise the steps:
e. removing the substrate from the support medium and decorating a foodstuff or beverage by applying the printed image and substrate to the surface of the foodstuff or beverage; and may further comprise step: and optionally,
f. exposing the foodstuff to water and/or humidity to assist the substrate to adhere to the foodstuff.

The invention further provides a method for decorating a foodstuff or beverage, comprising steps:
a. applying a water-soluble, edible, liquid primer onto a temporary support medium;
b. drying the primer on the support medium to afford a water-soluble substrate; wherein the substrate has a water solubility of at least 70%, wherein water solubility is measured at 20 °C;
c. disposing an edible image onto the substrate; and
d. drying the printed edible image to afford a decoration; and
e. removing the substrate from the support medium and decorating a foodstuff or beverage by applying the printed image and substrate to the surface of the foodstuff or beverage.

### BRIEF DESCRIPTION OF THE FIGURES

Figure 1 is a picture of the solubility study comparing a water-soluble substrate according to the invention (left) and a water-insoluble substrate of the prior art (right) at T (time) = 0 mins.
Figure 2 is a picture of the solubility study comparing a water-soluble substrate according to the invention (left) and a water-insoluble substrate of the prior art (right) at T (time) = 1 min.
Figure 3 is a picture of the solubility study comparing a water-soluble substrate according to the invention (left) and a water-insoluble substrate of the prior art (right) at T (time) = 5 mins.
Figure 4 is a picture of the solubility study comparing a water-soluble substrate according to the invention (left) and a water-insoluble substrate of the prior art (right) at T (time) = 10 mins.
Figure 5 is a picture of the solubility study comparing a water-soluble substrate according to the invention (left) and a water-insoluble substrate of the prior art (right) at T (time) = 30 mins.
Figure 6 is a picture of a cast film obtained from the aqueous suspension of the substrate of the prior art.

### DETAILED DESCRIPTION OF THE INVENTION

### Definitions

*Water-*solu*ble* = for the purposes of the present invention, a water-soluble compound or composition is a compound or composition that has a solubility of at least 50% (i.e., is fully dissolvable in water at a concentration of at least 50wt%, wherein % solubility is the number of grams of said compound or composition that fully dissolves in 100g of water at ambient temperature (20°C)). Thus, 50% solubility corresponds to 50g of a compound or composition fully dissolving in 100 g of water at 20°C.

*Fully dissolved =* when the mixture of water and compound or composition is transparent after 30 minutes at 20 °C with stirring.

*Transparent =* when it is possible to read text on a printed sheet of paper through the solution (from every angle).

*Edible* = any item that is safe for humans to eat, i.e., any item that can be consumed and digested by a consumer and that does not cause adverse effects to the health of said consumer.

*Food-compliant =* complies with FDA regulation CFR Part 21 and/or the corresponding EU food regulation EC 1333/2008.

*Pectin =* a naturally occurring substance (polysaccharide) found in fruits, including berries, apples and citrus fruits. Pectin typically has a weight average molecular weight of 50,000 to 180,000 Da.

*LM pectin* = low methoxyl pectin, i.e., pectin that has a level of esterification of less than 50%, such that less than 50% of the acid groups on the polysaccharide rings are esterified.

*Natural gums* = polysaccharides of natural origin, capable of causing a large increase in a solution's viscosity, even at small concentrations. Natural gums are mostly botanical gums, found in the woody elements of plants or in seed coatings. Natural gums can include the following: Agar, Alginic acid, sodium alginate, carrageenan, gum arabic, gum ghatti, gum tragacanth, karaya gum, Guar gum, Locust bean gum, Beta-glucan, Dammar gum, Glucomannan, Psyllium seed husks, Tara gum, Gellan gum, and Xanthan gum. *Gum arabic* is also known as gum acacia, gum sudani, and/or Senegal gum.

*Nestle Coffeemate* = a composition comprising glucose syrup, palm kernel oil, milk proteins, stabilisers (E331, E452), acidity regulator (E340), emulsifiers (E471, E472e), anti-caking agent (E170), and the colour riboflavin.

*Plantcol White* = a plant based "collagen" comprising water, citric acid, modified starch, coconut oil, and Potassium sorbate.

*IMWITOR*^{®} *742* = a blend of mono-, di-, and triglycerides, mainly of caprylic and capric acid.

*Citrem* = a citric acid ester of mono- and diglycerides.

*Modified starch* (also called a starch derivatives) is prepared by physically, enzymatically, and/or chemically treating native starch in order to change its properties.

Unless otherwise stated, all percentages (%) are weight percentages (wt%) relative to the total weight of the respective composition.

Unless otherwise stated, room/ambient temperature is 20 °C.

Boiling point = unless otherwise specified, all boiling points are measured under standard atmospheric pressure of 101 kPa.

### Advantages of the Present Invention

The preparation, decoration, and subsequent application of an edible decorated substrate to a food object, which dissolves when applied, is an advantageous feature of the present invention. The benefit is that the image is applied to the surface of the food object when the substrate is exposed to a small amount of moisture. Furthermore, when the water-soluble substrate is applied to the food or beverage object, the substrate is absorbed into or onto the surface, such that it is no longer visible, leaving only the printed image visible with excellent print quality. The substrates for use in the invention are edible and thus can be retained on the food or beverage objects.

The edible substrates of the invention can either be drawdown coated or simply cast onto a temporary backing sheet and then dried. Once dried, the substrates can be overprinted with a number of various techniques, including inkjet printing. Inkjet printing is advantageous as it enables a very high level of printed image quality to be achieved. The substrates of the invention thus obviate the well-known issues associated with printing directly onto food, which has the undesirable tendency of resulting in the ink absorbing into the food thus creating a wicking effect and dot spread, imparting poor print appearance. The printed image quality achieved when printing edible inkjet inks onto the substrates for use in the invention (e.g., pectin films) is visually superior to that achieved via direct printing methods, with a sharper image and greatly reduced dot spread than images printed directly onto a food object.

Moreover, the inventors have found that substrates made from water-soluble materials, such as pectin, can have an image printed thereon in a central location using edible inks, according to the design of the customer, and then the printed substrate can be shipped to the food factory, domestic place, or restaurant, such that a printer is not required on-site. Indeed, it may be impractical to invest in an inkjet printer for edible inks, which are only used occasionally, or even for personalization in the home, and the present invention addresses this issue. The substrates of the invention allow a decorator to decorate a food object without the need to own an inkjet printer, and can instead purchase the substrates for use in the invention (e.g., soluble transfers) pre-printed with edible inks ot their own personalised design, and apply them to foodstuffs.

In addition, the thickness of the substrates and the various ways in which the primers (e.g., pectin solutions) can be formed into the substrates are numerous, such that they do not require any specialized processing equipment.

Furthermore, the primers for making the edible substrates for use in the invention, such as those comprising pectin, comprise very few ingredients and are advantageously chosen from plant-based sources to be compliant with various food regulations and certifications. For example, the substrates for use in the invention may comprise only three ingredients, pectin, water, and a small quantity of a preservative. Therefore, the substrates are very simple to prepare and can be cast into any mould or shape on a temporary backing film, and then, once dried, printed with a variety of edible inkjet inks or even decorated with effects pigment inks, which are also edible.

The components of the substrates for use in the invention are preferably all derived from plant-based sources. The components are certified as edible, and as such are compliant with various food regulations, such as those required by vegan, kosher, and halal. More importantly, printed substrates, such as pectin substrates that are exemplified in this invention, may be permitted for application to foods such as breadcakes, frozen meats, frozen foods, baked goods and confectionary according to the FDA regulation CFR Part 21, and the corresponding EU food regulation EC 1333/2008, which regulate the definition and use of food additives.

The decorations of the invention are suitable for use on a very wide range of food products including frozen goods, baked goods, and confectionary. The invention avoids the use of plastic transfer films, which are typically used in the art for edible transfer printing of food or beverage objects and do not degrade in the environment after disposal.

### Water-Soluble Edible Substrates

The edible substrates for use in the invention are water-soluble. By water-soluble it is meant that the edible substrate has a water solubility of at least 50% when measured at ambient temperature (20 °C) or, in other words, that at last 50g of the substrate for use in the invention dissolves in 100 g of water at ambient temperature. At least 70 g of the substrate for use in the invention dissolves in 100 g of water at ambient temperature (i.e., the water solubility is at least 70%). More preferably, at least 90 g of the substrate for use in the invention dissolves in 100 g of water at ambient temperature (i.e., the water solubility is at least 90%). Even more preferably, at least 100 g of the substrate for use in the invention dissolves in 100 g of water at ambient temperature (i.e., the water solubility is at least 100%).

The skilled person would appreciate that while the substrates for use in the invention are water-soluble, the presence of small amounts of water insoluble components do not affect the function of these substrates, i.e., the ability of the substrate to be absorbed into the foodstuffs upon which the decorations are placed to leave only the printed edible ink image visible. Accordingly, the water-soluble edible substrates for use in the invention preferably comprise less than 5wt% of water-insoluble components, more preferably less than 3wt%, and even more preferably less than 1wt% of water-insoluble components. The water-soluble edible substrates for use in the invention are most preferably substantially free of water-insoluble components.

The substrate for use in the invention preferably comprises 30wt% or less of water, such as 20wt% or less of water.

### Composition of the primer for use in making the substrate for use in the invention

### Base Material

The inventors have found that substrates made from water-soluble materials, such as pectin, are particularly advantageous, providing edible substrates that can be printed upon with edible ink, easily removed from a support medium, and transferred to foodstuff. In addition, the inventors found that such substrates are water-soluble and thus dissolve into the foodstuffs. The substrates of the invention are also transparent and therefore, once dissolved, advantageously leave the printed edible image on the surface of the foodstuffs with no visible coloration of the foodstuffs resulting from the substrate. In other words, the substrates for use in the invention effectively transfer the printed images to foodstuffs but are not themselves visible, such that only the printed image is visible on the foodstuffs.

As an alternative or in addition to pectin, the primers for making the substrates of the present invention can comprise collagen (such as gelatine), citric acid, citric acid esters, vegetable oil (such as coconut oil), and combinations thereof.

Starch may be used in addition to the materials required by the invention (i.e., pectin, citric acid, citric acid esters, vegetable oil, collagen, and combinations thereof) and is preferably selected from the group consisting of corn starch, maize starch, modified starch, tapioca starch, and combinations thereof. More preferably, the starch for use in the invention is selected from corn starch, tapioca starch, and modified starch, and combinations thereof, and even more preferably the starch is modified starch. Modified starch includes starch that has been reacted with carboxylic acids or anhydrides to afford a product comprising carboxylic acid salts as substituents, for example, starch sodium octenylsuccinate.

The vegetable oil for use in the invention is preferably selected from the group consisting of coconut oil, olive oil, soybean oil, sunflower oil, palm oil, canola oil, palm kernel oil, and combinations thereof. More preferably, the vegetable oil is selected from the group consisting of olive oil, coconut oil, and combinations thereof. Even more preferably, the vegetable oil is coconut oil.

### Pigments

The substrates for use in the invention (e.g., pectin films) are typically transparent but can optionally be made opaque using, for example, food-compliant white pigments or food-compliant water-insoluble effects or coloured pigments, such as silver, gold, cacao husk, or combinations thereof.

### Additives

The substrate (and primer for making the substrate) for use in the invention may further comprise one or more additives, such as an additive selected from the group consisting of sodium alginate, sorbitol, potassium sorbate, glycose syrup, sucrose, beta carotene, milk proteins, whey, milk powder, and combinations thereof.

The substrate (and primer for making the substrate) for use in the invention can further comprise one or more surfactants. The surfactant is preferably a blend of mono-, di- and/or triglycerides, such as a blend of mono-, di- and/or triglycerides of caprylic and capric acid.

### "Edible" Inks and Substrates

The substrate of the invention and the inks disposed thereon are edible. Edible substrates and inks are materials that are safe for human consumption, i.e., they can be consumed and digested by a consumer and do not cause adverse effects to the health of said consumer. The edible substrates for use in the invention include those made from polysaccharides, such as sugars and starches, as well as proteins, such as collagen.

In contrast, inedible-substrates include the synthetic substrates: polyolefins, including polyethylene and polypropylene, polystyrene, poly(meth)acrylates, poly(meth)acrylamides, polycarbonates, polyvinyls, polyamides, and polyesters.

### Amounts of the components in the substrate and primer for making the substrate

### Base Material

The substrate for use in the invention preferably comprises a material selected from the group consisting of pectin, citric acid, citric acid esters, vegetable oil, collagen, and combinations thereof. The substrate for use in the invention more preferably comprises a material selected from the group consisting of pectin, gelatine, citric acid, citric acid esters, coconut oil, and combinations thereof. The substrate for use in the invention even more preferably comprises pectin, such as low methoxyl (LM) pectin.

The substrate for use in the invention preferably comprises at least 50 wt% of a material selected from the group consisting of pectin, citric acid, citric acid esters, vegetable oil, collagen, and combinations thereof, based on the total weight of the non-water components. The substrate for use in the invention more preferably comprises 50 to 95wt%, such as 55 to 95wt%, of a material selected from the group consisting of pectin, citric acid, citric acid esters, vegetable oil, collagen, and combinations thereof, based on the total weight of the non-water components, even more preferably 60 to 90wt%, and most preferably 60 to 88 wt%, of a material selected from the group consisting of pectin, citric acid, citric acid esters, vegetable oil, collagen, and combinations thereof, based on the total weight of the non-water components of the substrate. The substrate may comprise pectin in combination with one or more materials selected from starch, citric acid, citric acid esters, vegetable oil, and collagen.

The substrate for use in the invention preferably comprises at least 50 wt% of a material selected from the group consisting of pectin, gelatine, citric acid, citric acid esters, coconut oil, and combinations thereof, based on the total weight of the non-water components. The substrate for use in the invention more preferably comprises 50 to 95wt%, such as 55 to 95wt% of a material selected from the group consisting of pectin, gelatine, citric acid, citric acid esters, coconut oil, and combinations thereof, even more preferably 60 to 90wt%, and most preferably 60 to 88 wt% of a material selected from the group consisting of pectin, gelatine, citric acid, citric acid esters, coconut oil, and combinations thereof, based on the total weight of the non-water components. The substrate may comprise pectin in combination with one or more materials selected from modified starch, corn starch, tapioca starch, gelatine, citric acid, citric acid esters, and coconut oil.

The substrate for use in the invention preferably comprises at least 50 wt% of a material selected from the group consisting of pectin, citric acid, and combinations thereof, based on the total weight of the non-water components. The substrate for use in the invention more preferably comprises 50 to 95wt%, such as 53 to 95wt% of a material selected from the group consisting of pectin, citric acid, and combinations thereof, even more preferably 60 to 90wt%, and most preferably 60 to 88 wt% of a material selected from the group consisting of pectin, citric acid, and combinations thereof, based on the total weight of the non-water components. The substrate may comprise pectin in combination with one or more materials selected from modified starch and citric acid.

The substrate for use in the invention preferably comprises at least 50 wt% of a material selected from the group consisting of pectin, coconut oil, citric acid, and combinations thereof, based on the total weight of the non-water components. The substrate for use in the invention more preferably comprises 50 to 95wt%, such as 58 to 95wt% of a material selected from the group consisting of pectin, coconut oil, citric acid, and combinations thereof, even more preferably 60 to 90wt%, and most preferably 60 to 88 wt% of a material selected from the group consisting of pectin, coconut oil, citric acid, and combinations thereof, based on the total weight of the non-water components. The substrate may comprise pectin in combination with one or more materials selected from coconut oil and citric acid.

The substrate for use in the invention preferably comprises at least 20wt% pectin, such as 20 to 90wt% pectin, based on the total weight of the non-water components, more preferably 30 to 80wt% pectin, even more preferably 39 to 75wt%, and most preferably 50 to 70 wt% pectin, based on the total weight of the non-water components.

The substrate for use in the invention is obtained from a water-soluble, edible liquid primer.

The water-soluble, edible liquid primer for use in the invention preferably comprises 1 to 10 wt% of a material selected from the group consisting of pectin, collagen, and combinations thereof, more preferably 2 to 8wt%, and even more preferably 3 to 6 wt%, such as 3 to 5 wt%, of a material selected from the group consisting of pectin, collagen, and combinations thereof, based on the total weight of the liquid primer.

The water-soluble, edible liquid primer for use in the invention preferably comprises 1 to 10 wt% of pectin, more preferably 2 to 8wt% pectin, and even more preferably 3 to 6 wt% pectin, such as 3 to 5 wt% pectin, based on the total weight of the liquid primer. The water-soluble, edible liquid primer for use in the invention most preferably comprises 3 to 4 wt% of low methoxyl pectin, based on the total weight of the liquid primer.

### Water

The water soluble, edible liquid primer for use in the invention preferably comprises 60 to 95wt% water, more preferably 70 to 95wt% water, even more preferably 80 to 95wt% water, and most preferably 88 to 95wt% water.

### Citric Acid

The substrate for use in the invention may comprise citric acid and/or citric acid esters, such as preferably 0.1 to 60wt% citric acid and/or citric acid esters relative to the total weight of the non-water components of the substrate. The substrate for use in the invention may comprise 0.1 to 60wt% citric acid relative to the total weight of the non-water components of the substrate.

The water soluble, edible liquid primer for use in the invention may comprise citric acid, such as preferably 0.001 to 5wt% citric acid. The water soluble, edible liquid primer for use in the invention may comprise 0.001 to 2wt% citric acid, such as 0.001 to 0.1 wt% citric acid, or 0.007 to 0.05 wt% citric acid relative to the total weight of the primer.

### Additives

The substrate for use in the invention may comprise a surfactant, preferably in an amount of 0.1 to 5 wt% relative to the total weight of the non-water components of the substrate. More preferably, the substrate for use in the invention comprises a surfactant in an amount of 1 to 4 wt% relative to the total weight of the non-water components of the substrate, such as 1 to 3 wt% relative to the total weight of the non-water components of the substrate.

The surfactant can be a blend of mono-, di- and/or triglycerides, such as a blend of mono- , di- and/or triglycerides of caprylic and capric acid.

The substrate for use in the invention may comprise one or more additives selected from the group consisting of potassium sorbate, glycose syrup, sucrose, beta carotene, and combinations thereof in an amount up to 10wt%, preferably up to 8wt% relative to the total weight of the non-water components of the substrate.

The substrate for use in the invention may comprise one or more additives selected from the group consisting of sodium alginate, sorbitol, milk proteins, whey, and milk powder, in an amount up to 40wt%, such as up 35 to wt%, or up to 20 wt%.

### Natural Gum

The substrate for use in the invention preferably comprises less than or equal to 40wt% of natural gum, relative to the total weight of the non-water components of the substrate. The substrate for use in the invention more preferably comprises less than or equal to 30wt% natural gum, relative to the total weight of the non-water components of the substrate, such as less than or equal to 26 wt%, or even more preferably less than or equal to 15 wt% natural gum, relative to the total weight of the non-water components of the substrate. The natural gum may be gum acacia.

The water soluble, edible liquid primer for use in the invention preferably comprises less than or equal to 20wt% of natural gum, relative to the total weight of the primer. The water-soluble, edible liquid primer for use in the invention more preferably comprises less than or equal to 15wt% of natural gum, relative to the total weight of the primer, such as less than or equal to 10 wt% of natural gum, relative to the total weight of the primer. The natural gum may be gum acacia.

The inventors found that incorporating large amounts of natural gum, such as gum acacia, into the substrate for use in the invention, provides properties that are unsuitable for the intended use of the invention. In particular, and as demonstrated in Comparative Example 1, increasing the amount of natural gum (e.g., gum acacia) to above 30wt% relative to the total weight of the primer (i.e., above 70wt% relative to the total weight of the non-water components of the substrate) provides substrates that cracked and could not be printed upon.

### Pigment

The substrate for use in the invention preferably comprises less than or equal to 10wt% pigment, relative to the total weight of the substrate. The substrate for use in the invention more preferably comprises less than or equal to 5wt% pigment, relative to the total weight of the substrate, such as less than or equal to 3 wt%, or less than or equal to 1 wt%, pigment, relative to the total weight of the substrate. The substrate for use in the invention may be substantially free of pigment.

The water-soluble, edible, liquid primer for use in the invention preferably comprises less than or equal to 5wt% of pigment, relative to the total weight of the primer. The water-soluble, edible liquid primer for use in the invention more preferably comprises less than or equal to 3wt% pigment, relative to the total weight of the primer, such as less than or equal to 2 wt%, or less than or equal to 1 wt% pigment, relative to the total weight of the primer. The water-soluble, edible, liquid primer for use in the invention may be substantially free of pigment.

### Cellulose

The substrate for use in the invention preferably comprises less than or equal to 50 wt% cellulose, more preferably less than or equal to 30wt%, or less than or equal to 15wt% cellulose, and even more preferably less than or equal to 10wt% cellulose, relative to the total weight of the non-water components of the substrate. The substrates for use in the invention may be substantially free of cellulose. Cellulose includes cellulose derivatives, such as methylcellulose and microcrystalline cellulose.

The water-soluble, edible, liquid primer for use in the invention preferably comprises less than or equal to 10 wt% cellulose and more preferably less than or equal to 5wt% cellulose relative to the total weight of the primer composition.

### Exemplary compositions

The substrate for use in the invention preferably comprises 50 to 95wt% of a material selected from the group consisting of pectin, starch, citric acid, citric acid esters, vegetable oil, collagen, and combinations thereof, less than or equal to 40wt% of natural gum, less than or equal to 50 wt% cellulose, and less than or equal to 20wt% pigment, based on the total weight of the non-water-based components.

The substrate for use in the invention more preferably comprises 50 to 95wt% of a material selected from the group consisting of pectin, modified starch, corn starch, tapioca starch, gelatine, citric acid, citric acid esters, coconut oil, and combinations thereof, less than or equal to 30wt% natural gum, less than or equal to 30wt% cellulose, and less than or equal to 10wt% pigment, based on the total weight of the non-water components.

The substrate for use in the invention even more preferably comprises 53 to 95wt% of a material selected from the group consisting of pectin, modified starch, citric acid, and combinations thereof, less than or equal to 26 wt% natural gum, less than or equal to 15wt% cellulose, and less than or equal to 5 wt% pigment, based on the total weight of the non-water components.

The substrate for use in the invention even more preferably comprises 58 to 95wt% of a material selected from the group consisting of pectin, coconut oil, citric acid, and combinations thereof, less than or equal to 26 wt% natural gum, less than or equal to 15wt% cellulose, and less than or equal to 5 wt% pigment, based on the total weight of the non-water components.

The substrate for use in the invention preferably comprises 30 to 80wt% pectin, less than or equal to 15 wt% natural gum, less than or equal to 10wt% cellulose, and less than or equal to 3 wt% pigment, based on the total weight of the non-water components.

The substrate for use in the invention most preferably comprises 39 to 75wt%, pectin, based on the total weight of the non-water-based components, is substantially free of natural gum, is substantially free of cellulose, and is substantially free of pigment.

### Edible Inks

The edible substrate for use in the invention comprises an edible image disposed thereon, wherein the image is obtained from an edible ink. The edible ink is suitable for being printed onto the edible substrate. The edible ink is preferably printed onto the substrate, for example, using inkjet printing. Preferably, the edible inks are food-certified edible inks, such as inks that comply with FDA regulation CFR Part 21, and the corresponding EU food regulation EC 1333/200.

The edible inks for use in the invention comprise water, a humectant, and food colouring.

The edible ink for use in the invention may comprise water, glycerin, vegetable oil, flour, cellulose, starch, and calcium carbonate. For example, the edible ink may comprise about 30% to 45% water; from 8% to 12% glycerin; from 3% to 6% vegetable oil; from 8% to 12% flour; from 3% to 4.5% of microcrystalline cellulose; from 6% to 8% of starch; and from 0.8% to 1.2% of calcium carbonate.

The edible inks for use in the invention may comprise water, a humectant, and food coloring. The humectants can include, for example, glycols such as propylene glycol, hexylene glycol, and butylene glycol, aloe vera gel, alpha hydroxy acids such as lactic acid, egg yolk and egg white, glyceryl triacetate, honey, polymeric polyols such as polydextrose, Quillaia, Sodium hexametaphosphate E452i, sugar alcohols (sugar polyols) such as glycerol, sorbitol, xylitol, maltitol, urea, and castor oil.

The edible ink may instead comprise about: 8.3% Trimoline^{®} (an inverted sugar syrup comprising 82wt% crystallized inverted sugar syrup and 18wt% water), 9.4% glycerin; 1.8% potassium polysorbate; 3.7% canola oil; 1.8% coconut oil; 0.2% soybean lecithin· 10.2% of tapioca flour; 4.6% of solid corn syrup; 2.8% of confectioner's sugar; 3.7% of microcrystalline cellulose· 0.05% of gum acacia; 0.5% of modified starch· 0.5% of citric acid; 0.01 % of potassium sorbate; 0.5% of alginate; 7% of nee starch; 1 % of calcium carbonate; 0.1 % of milk protein; and 6% of food dye, and the remainder is water.

### Substrate Thickness

The substrates for use in the invention may be any suitable thickness, such as from 0.01 mm to 10 mm, preferably from 0.1 mm to 8mm, such as 1 mm to 6mm, or 2mm to 5mm, and even more preferably from 3mm to 4 mm.

### Foodstuffs

The decoration of the invention can be applied to any suitable foodstuffs, which are either already rich in water or are able to absorb water. The foodstuffs could be, for example, frozen meat, frozen baked goods, baked cookies, baked bread or bread cakes, baked cakes, cut fruit, cakes, pastries, pasties, ice-cream, bread, beer, cream, candy, biscuits, chocolate, vegetables, and other meat products. The invention is especially suitable for use with contoured food objects, such as bread rolls. It is also applicable to the personalisation of frozen articles and frozen dairy items and ices. Furthermore, the decoration of the invention can be applied to the foam tops of beverages, such as coffee, beer, and other beverages.

### Method of making the decoration of the invention

### Making the substrate

The invention also provides a method of providing a decoration for a foodstuff or beverage or a method for decorating a foodstuff or beverage, comprising the steps of:
a. applying a water-soluble, edible, liquid primer onto a temporary support medium;
b. drying the primer on the support medium to afford the substrate for use in the invention;
c. disposing an edible image onto the substrate; and
d. drying the printed edible image to afford the decoration for use in the invention.

The primer solution is applied to a temporary support medium. The temporary support media can a material selected from the group consisting of paper, plastic, card, and metal. In good sustainability practice, the temporary support layer can be a layer used to package the printed films for shipping to a client.

There is no specific requirement for the method of applying the primer to the temporary support medium. Accordingly, the primer can be applied, for example, by simply pouring the primer onto the support medium, by using a drawdown or printing process, or by other means.

Control of the thickness of the substrate is not essential and the thickness can be tailored to specific requirements by altering the application method.

Once applied to the temporary support medium, the substrate is dried. The substrate can be either allowed to air dry or can undergo forced convection drying in a low temperature oven, air knife, or other convection system. Near IR dryers or other types of drying, such as warm air, can also be used.

### Printing an edible ink onto the substrate

Once the substrate (e.g., pectin or other water-soluble film) is dried (i.e., is not tacky), then an edible ink can be printed thereon. The edible ink can be disposed onto the edible substrate using any suitable process, including screen printing such as silk screen printing, offset printing, thermal transfer, and inkjet printing Preferably, the edible ink is printed using inkjet printing.

The full gamut of colours is available to construct fully CMYK and effects images. In effects, it is possible to print edible gold leaf or titanium dioxide white inks onto the substrates. This negates the requirement to add a contrasting agent to the substrate (e.g., pectin film). It is possible, for example, to print a layer of base white ink onto the substrate (e.g., pectin film) and then in a second pass, once dry, to overprint with CMYK or effects. This liberates the printed substrate (e.g., pectin film) on a temporary support, which can be suitably packaged in a desiccated package and then shipped.

### Method of decorating a foodstuff with the decoration of the invention

A simple process has been devised to overcome some of the challenges of inkjet printing directly onto certain foodstuffs. By printing edible inks onto simple films of pectin or other natural polymers, applying the film onto the object, followed by exposure to water vapour (humidity or steam), the film dissolves on the surface of the food object leaving the image on the surface of the object. The primer film could also be applied to the food or beverage substrate using an edible adhesive (for example Dab-N-hold, Wilton Industries) or by using the liquid primer the film was made from as an adhesive.

The substrate can be peeled away from the temporary support/packaging layer and physically applied to a food product. The affixed substate can then be either left to melt into the foodstuff or alternatively exposed to a small quantity of water vapour, or humidity, for example, which might be present during a cooking/baking process. The substrate (e.g., pectin film) is absorbed into the surface of the foodstuff, carrying with it the printed image. The image colour droplets do not migrate as they are held in place in the top surface of the foodstuff in the presence of the substrate (e.g., pectin film) as a polymeric scaffold.

Once the substrate (e.g., pectin film) is applied to a food object and placed on the food article, usually within seconds, in a semi-humid environment (e.g., at typical ambient conditions of 20°C and 40% relative humidity), the pectin substrate readily dissolves on the surface of the food object carrying the printed image onto the surface.

A pectin substrate may provide a desirable, visually glossy finish to foodstuffs. There is no transfer film to dispose of at the end of the process and no film on the top of the food article. Moreover, even in conditions of low humidity, a pectin substrate can easily be transferred, simply by first spraying the foodstuffs with water.

The optional step of exposing the foodstuff to water and/or humidity to assist the dried primer layer film to adhere to the foodstuff may be performed at a humidity level of 10 to 80% relative humidity, such as 20 to 70% relative humidity, preferably 30 to 65% relative humidity, and more preferably 40 to 60% relative humidity.

The present invention has been described in detail, including various embodiments thereof. However, it will be appreciated that those skilled in the art, upon consideration of the present disclosure, may make modifications and/or improvements on this invention that fall within the scope of the invention.

### EXAMPLES

The invention is further described by the following non-limiting examples which further illustrate the invention, and are not intended, nor should they be interpreted to, limit the scope of the invention.

### Test Methods

### Viscosity

Viscosity was measured on a Brookfield DV II+ Pro Viscometer, using a UL spindle, and the sample cell immersed in a temperature-controlled water bath at 25°C.

### Surface tension

Surface tension was measured using a Kruss K11MK4 tensiometer at 21°C

### pH

pH was checked and measured on a Mettler Toledo MP220 pH meter.

### Solubility

Solubility of a compound or composition is typically determined by measuring the maximum amount of said compound or composition that can be dissolved in 100g of water at ambient temperature (defined as 20°C) with stirring. Fully dissolvable is defined as when the mixture of water and compound or composition is transparent after 30 minutes at 20 °C with stirring. Transparent is defined as when it is possible to read text on a printed sheet of paper through the solution (from every angle). For the purposes of the invention, water soluble is defined as a minimum solubility of 50g of compound or composition in 100 g of water at 20 °C (i.e., 50% solubility).

### Synthetic Examples

*Comparative Example 1. Gum Arabic Based Liquid Formulation primer.*

0.16g of the surfactant "Imwitor 742", 46.08g of Gum Arabic stock solution (37.2% solids), and 1.4g Polysorbate 80 were mixed with 33.64g distilled water. The mixture was stirred on a laboratory stir plate for 1 hour at room temperature. The resultant composition contains 0.2wt% of the surfactant "Imwitor 742"; 1.7wt% of Polysorbate 80; 21.1wt% of Gum Arabic solids; and 77.0wt% distilled water.

### Inventive Example 1. Pectin Based Liquid Formulation Primer

To a 150 mL beaker was added deionised water (94.33g) and the stirrer started. 0.02g of Citrem (from Danisco, a subsidiary of Dupont) was added, followed by 0.15g "Imwitor 742" (from IOI Oleo), 0.35g potassium sorbate, 1.00g sorbitol, and 3.55g LM pectin (Modernist Pantry, Ingredion). The mixture was stirred for 120 minutes and then 0.6g of a solution of citric acid in water (1.25%w/w) was added and the pH measured. The pH was then maintained at pH 5.0 and the resulting liquid preparation purified by filtration through a 226µm screen mesh.

The viscosity was 100cP. The surface tension was recorded at 30 dynes/cm. The pH was 5.00.

### Inventive Example 2. Pectin Based Liquid Formulation Primer

To a 150 mL beaker was added 72.93g deionised water and the stirrer started. 0.02g of Citrem (from Danisco) was added, followed by 0.15g "Imwitor 742" (from IOI Oleo), 0.35g potassium sorbate, 20.00g Plantcol White and 3.55g LM pectin (Modernist Pantry). The mixture was stirred for 120 minutes and then 0.6g of a solution of citric acid in water (1.25%w/w) was added and the pH measured. The pH was then maintained at pH 5.0 and the resulting liquid preparation purified by filtration through a 226µm screen mesh.

The viscosity was 100cP. The surface tension was recorded at 30 dynes/cm. The pH was 5.00.

### Inventive Example 3. Pectin Based Liquid Formulation Primer

To a 150 mL beaker was added 92.93g deionised water and the stirrer started. 0.02g of Citrem (from Danisco) was added, followed by 0.15g "Imwitor 742" (from IOI Oleo), 0.35g potassium sorbate, and 3.55g LM pectin (Modernist Pantry). The mixture was stirred for 120 minutes and then 10g of a solution of citric acid in water (50%w/w) was added and the pH measured. The pH was then maintained at pH 5.0 and the resulting liquid preparation purified by filtration through a 226µm screen mesh.

The viscosity was 100cP. The surface tension was recorded at 30 dynes/cm. The pH was 5.00.

### Inventive Example 4. Pectin Based Liquid Formulation Primer

To a 150 mL beaker was added 93.33g deionised water and the stirrer started. 0.02g of Citrem (Danisco a subsidiary of Dupont) was added, followed by 0.15 g Imwitor 742 (IOI Oleo), 0.35g potassium sorbate, 2.0g Nestle Coffeemate, and 3.55g LM pectin (Modernist Pantry, Ingredion). The mixture was stirred for 120 minutes and then 0.6g of a solution of citric acid in water (1.25%w/w) was added and the pH measured. The pH was then maintained at pH 5.0 and the resulting liquid preparation purified by filtration through a 226um screen mesh.

The viscosity was 227cP. The surface tension was recorded at 30 dynes/cm. The pH was 5.00.

### Inventive Example 5. Pectin Based Liquid Formulation Primer

To a 150 mL beaker was added 94.33g deionised water and the stirrer started. 0.02g Citrem (Danisco a subsidiary of Dupont) was added, followed by 0.15 g Imwitor 742 (IOI Oleo), 0.35g potassium sorbate, 1.0g sodium alginate (Modernist Pantry), and 3.55g LM pectin (Modernist Pantry, Ingredion). The mixture was stirred for 120 minutes and then 0.6g of a solution of citric acid in water (1.25%w/w) was added and the pH measured. The pH was then maintained at pH 5.0 and the resulting liquid preparation purified by filtration through a 226µm screen mesh.

The viscosity was 470cP. The surface tension was recorded at 30 dynes/cm. The pH was 5.00.

### Casting Films of Comparative Example 1 and Inventive Examples 1 to 5

Casting of films was performed at room temperature and standard relative humidity (40-60%) by adding enough primer liquid formulation to cover a metal dish with a 3-4mm depth of the liquid formulation. The metal dishes were then placed on a warm heated surface (for example, a hot plate at ~90°F) until set (usually 3-4 hours).

After drying, the films were peeled off the metal support tray and printed using a Primera Eddie inkjet or Logojet Pro (H4 version) printer containing Sensijet FSE series edible inkjet inks. The printed films were then stored and adhered to various food objects.

When the standard sprayable wet primer formulation of Comparative Example 1 was formed into a substrate and air-dried, the resulting films cracked and broke down and could not be decorated by inkjet printing. Thus, for Comparative Example 1, the only attainable ratings were for visual inspection, solubility, and gloss for the beer foam test (see Table 5).

The film integrity after application and image quality were awarded various ratings, on a scale of 1-5. The tests undertaken were as follows:
i. Visual Inspection for image quality: 5 (best) was awarded for complete preservation of the image quality on the food object and 1 (worst) was awarded for complete miscibility of the image on itself, with ratings of 2-4 given for various intermediate image quality. A rating of 4-5 is desirable, but 2-3 is also considered acceptable.
ii. Color bleed: 5 (best) was awarded for no color bleed of the different colored inks on the pectin films and 1 (worst) was awarded for complete inter-color bleed, with ratings of 2-4 given for various intermediate color bleed. A rating of 4-5 is desirable, but 2-3 is also considered acceptable.
iii. Mottle: 5 (best) was awarded for no mottle / color uniformity and 1 (worst) tor severely mottled colors, with ratings of 2-4 given for various intermediate mottle. A rating of 4-5 is desirable, but 2-3 is also considered acceptable.
iv. Film integrity after application to the food article: 5 (best) was awarded for complete adhesion of the film and 1 (worst) where the film exhibited poor adhesion. A rating of 4-5 is desirable, but 2-3 is also considered acceptable.
v. Solubility: Replaces film integrity for the beer foam test. Solubility was rated as either "yes" (printed primer film dissolves by the time the foam dissipates); or "no" (printed primer film does not dissolve by the time the foam dissipates), with a "yes" rating being preferred - see Table 5.
vi. Gloss: 5 was recorded for a highly glossy surface and 1 for a matt surface, with ratings of 2-4 given for various intermediate gloss. Note that gloss requirements are customer-specific and thus there is no specific rating for best and worst gloss ratings.

### Results by Food Article

- The performance of the individual coatings is dependent on end use, e.g., Inventive Example 2 has higher ratings on brioche buns than on chocolate coated ice cream bars.
- Comparative Example 1 failed due to the primer film cracking and could not be decorated by inkjet printing. Thus, for Comparative Example 1, the only attainable ratings were for visual inspection, solubility, and gloss for the beer foam test (see Table 5).

**Table 1: Article 1 - Chocolate coated ice cream bars**

| Sample | Visual Inspection | Color Bleed | Mottle | Film integrity | Gloss |
|---|---|---|---|---|---|
| Comp. Ex 1 | NA | NA | NA | NA | NA |
| Inv. Ex. 1 | 4 | 5 | 5 | 4 | 5 |
| Inv. Ex. 2 | 3 | 4 | 3 | 5 | 1 |
| Inv. Ex. 3 | 2 | 2 | 1 | 1 | 4 |
| Inv. Ex. 4 | 4 | 4 | 4 | 5 | 1 |
| Inv. Ex. 5 | 5 | 5 | 4 | 5 | 5 |

Table 1 shows that Inventive Examples 1, 4 and 5 are best for chocolate coated ice cream bars; Inventive Example 2 is also suitable; Inventive Example 3 is less suitable.

**Table 2: Article 2 - Brioche Buns**

| Sample | Visual Inspection | Color Bleed | Mottle | Film integrity | Gloss |
|---|---|---|---|---|---|
| Comp. Ex 1 | NA | NA | NA | NA | NA |
| Inv. Ex. 1 | 3 | 2 | 5 | 2 | 5 |
| Inv. Ex. 2 | 4 | 5 | 5 | 5 | 2 |
| Inv. Ex. 3 | 2 | 4 | 4 | 4 | 5 |
| Inv. Ex. 4 | 3 | 2 | 5 | 5 | 3 |
| Inv. Ex. 5 | 4 | 5 | 5 | 4 | 4 |

Table 2 shows that Inventive Examples 2 and 5 are best for brioche buns; Inventive Examples 1, 3 and 4 are also suitable.

**Table 3: Article 3 - White chocolate**

| Sample | Visual Inspection | Color Bleed | Mottle | Film integrity | Gloss |
|---|---|---|---|---|---|
| Comp. Ex 1 | NA | NA | NA | NA | NA |
| Inv. Ex. 1 | 5 | 4 | 5 | 4 | 5 |
| Inv. Ex. 2 | 4 | 3 | 2 | 5 | 1 |
| Inv. Ex. 3 | 2 | 4 | 1 | 2 | 3 |
| Inv. Ex. 4 | 3 | 3 | 2 | 5 | 1 |
| Inv. Ex. 5 | 5 | 5 | 5 | 5 | 4 |

Table 3 shows that Inventive Examples 1 and 5 are best for white chocolate; Inventive Example 2 and 4 are also suitable; Inventive Example 3 is less suitable.

**Table 4: Article 4 - Wheatmeal biscuits**

| Sample | Visual Inspection | Color Bleed | Mottle | Film integrity | Gloss |
|---|---|---|---|---|---|
| Comp. Ex 1 | NA | NA | NA | NA | NA |
| Inv. Ex. 1 | 3 | 4 | 4 | 4 | 5 |
| Inv. Ex. 2 | 4 | 3 | 3 | 5 | 1 |
| Inv. Ex. 3 | 2 | 2 | 1 | 4 | 4 |
| Inv. Ex. 4 | 4 | 4 | 4 | 5 | 1 |
| Inv. Ex. 5 | 5 | 5 | 4 | 5 | 5 |

Table 4 shows that Inventive Examples 4 and 5 are best for wheatmeal biscuits; Inventive Example 2 and 5 are also suitable; Inventive Example 3 is less suitable.

**Table 5: Article 5 - Beer foam**

| Sample | Visual Inspection | Color Bleed | Mottle | Solubility | Gloss |
|---|---|---|---|---|---|
| Comp. Ex 1 | 1 | NA | NA | Yes | 1 |
| Inv. Ex. 1 | 4 | 4 | 4 | No | 5 |
| Inv. Ex. 2 | 4 | 4 | 4 | No | 1 |
| Inv. Ex. 3 | 4 | 3 | 2 | Yes | 3 |
| Inv. Ex. 4 | 4 | 4 | 4 | No | 1 |
| Inv. Ex. 5 | 5 | 5 | 4 | Yes | 4 |

Table 5 shows that Inventive Example 5 is best for beer foam; Inventive Examples 3 is also suitable; Inventive Examples 1, 2 and 4 are less suitable.

### Comparative Example 2

Comparative Example 2 was prepared from a primer with the following composition.

| **Component** | **Amount (wt%)** |
|---|---|
| Maize starch | 10.1 |
| Gum acacia | 10.1 |
| Xantham | 1.37 |
| Potassium sorbate | 0.1 |
| Sweetener | 0.06 |
| Sorbitol | 16.84 |
| Polysorbate 80 | 0.67 |
| Water | 60.63 |
| TiO₂ | 0.13 |
| **TOTAL** | **100** |

The substrate of Comparative Example 2 is based on Formulation 5 of US20060275529A1 (see Table 5 in paragraph [0068]). The only exception is that polysorbate 80 was used instead of polysorbate 60. Polysorbate 80 is polyoxyethylene (20) sorbitan monooleate. Polysorbate 60 is polyoxyethylene (20) sorbitan monostearate.

All the dry ingredients except titanium dioxide were dry blended in a mixer. All the liquid ingredients were blended in a separate mixture, to which titanium dioxide was then added and dispersed using a Branson Digital Sonifer SFX 550 disperser (mfr. Emerson Automation Solutions. St. Louis, Mo.). Mixing was conducted for exactly 2 minutes. The liquid mixture was then added to the dry mixture and mixed until a well-blended composition was achieved. The composition was then sieved through a mesh paint strainer (size: 226 micrometers). The final composition was then made into substrates using coated can lids and air drying. Thickness of the test substrates was from about 0.15 to 1.15 mm.

### Solubility Testing

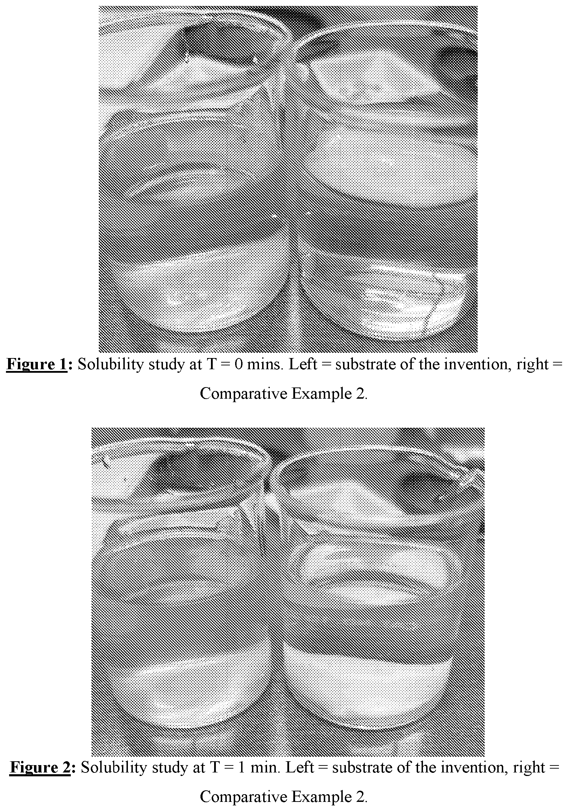

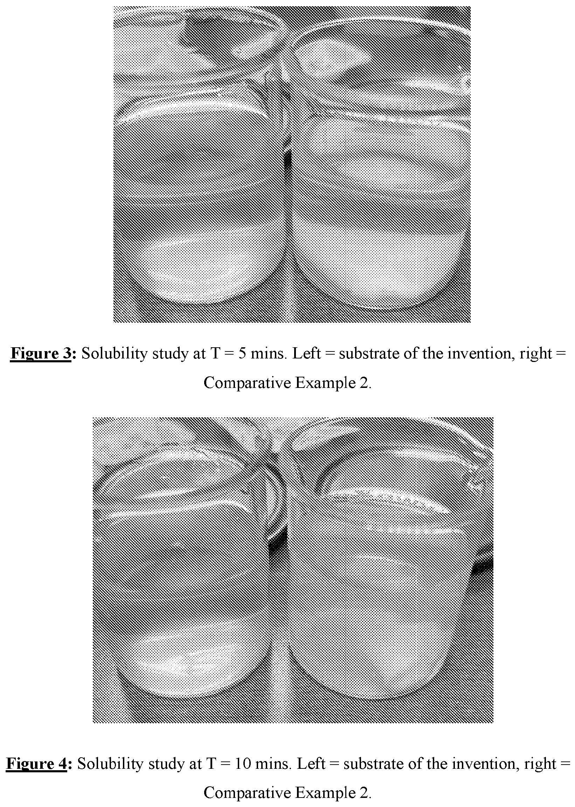

A substrate for use in the invention prepared from the primer of Inventive Example 1 and the substrate of Comparative Example 2 were prepared and placed into a beaker comprising 30 mL of water at room temperature. The substrates are visually inspected immediately and then after 1 minute, 5 minutes, 10 minutes, and 30 minutes (see Figures 1 to 5). After 30 minutes, the substrate for use in the invention was completely dissolved and the substrate of Comparative Example 2 was not.

In particular, the substrate for use in the invention almost immediately dissolved when added to the water and was fully dissolved between 5 and 10 minutes later. The substrate of Comparative Example 2 was still intact after 10 minutes and was 30-40% undissolved after 30 minutes (i.e., the water was not transparent).

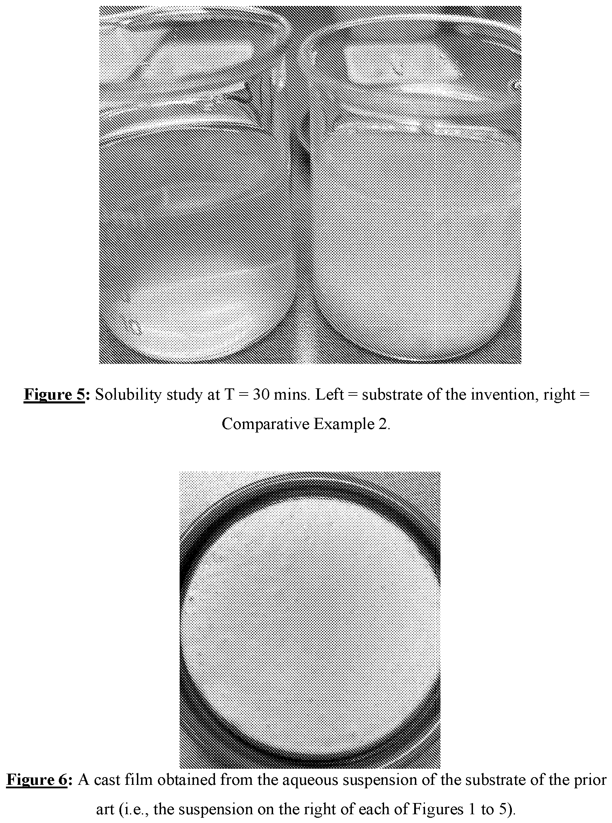

After a few days, the solubility test of Comparative Example 2 has a clotted milk appearance as it is separating/unstable. It can be shaken or stirred to restore consistency but doing so incorporated air bubbles that create a cratered film when cast (see Figure 6).

## Claims

1. A decoration for food stuffs comprising:
a) an edible substrate;
b) an edible image disposed on the edible substrate;
wherein the edible substrate comprises a material selected from the group consisting of pectin, citric acid, citric acid esters, vegetable oil, collagen, and combinations thereof; wherein said material is present in the substrate in an amount of at least 50wt% relative to the total weight of the non-water components of the substrate; wherein the substrate has a water solubility of at least 70%, wherein water solubility is measured at 20 °C.

2. The decoration of any preceding claim, wherein the substrate has a water solubility of at least 90%, or 100%, wherein water solubility is measured at 20 °C.

3. The decoration of any preceding claim, wherein:
i) the substrate comprises a material selected from the group consisting of pectin, gelatine, citric acid, citric acid esters, coconut oil, and combinations thereof, wherein the material selected from the group consisting of pectin, gelatine, citric acid, citric acid esters, coconut oil, and combinations thereof is present in an amount of at least 50wt%, such as 50 to 95wt%, relative to the total weight of the non-water components of the substrate; and/or
ii) the substrate comprises a material selected from the group consisting of pectin, citric acid, and combinations thereof, wherein the material selected from the group consisting of pectin, citric acid, and combinations thereof is present in the substrate in an amount of at least 50 wt%, such as 50 to 95wt%, relative to the total weight of the non-water components of the substrate, such as at least 53wt%, or at least 60wt%, relative to the total weight of the non-water components of the substrate; and/or
iii) the substrate comprises a material selected from the group consisting of pectin, coconut oil, citric acid, and combinations thereof, wherein the material selected from the group consisting of pectin, coconut oil, citric acid, and combinations thereof is present in the substrate in an amount of at least 50 wt%, such as 50 to 95wt%, relative to the total weight of the non-water components of the substrate, such as at least 58wt%, or at least 60wt%, relative to the total weight of the non-water components of the substrate.

4. The decoration of any preceding claim, wherein:
i) the substrate comprises pectin and optionally one or more of the other materials recited in the preceding claims; optionally wherein the pectin is derived from lemon peels; and/or
ii) pectin is present in the substrate in an amount of at least 20 wt%, such as 20 to 90 wt%, relative to the total amount of the non-water components of the substrate, such as at least 30wt%, or at least 39wt%, or at least 50wt%, relative to the total amount of the non-water components of the substrate; and/or
iii) the substrate comprises less than or equal to 40wt% natural gum, such as less than or equal to 30wt%, less than or equal to 26wt%, or less than or equal to 15wt% natural gum, relative to the total weight of the non-water components of the substrate; and/or
iv) the substrate comprises less than or equal to 20wt% pigment, such as less than or equal to 10wt%, or less than or equal to 3wt%, pigment relative to the total weight of the non-water components of the substrate; and/or
v) the substrate is substantially free of pigment; and/or
vi) the substrate comprises less than or equal to 10wt% cellulose, such as less than or equal to 5wt%, or less than or equal to 3wt% cellulose, relative to the total weight of the non-water components of the substrate; optionally wherein the substrate is substantially free of cellulose; and/or
vii) the substrate comprises one or more additives selected from the group consisting of sodium alginate, sorbitol, milk proteins, whey, and milk powder; optionally wherein the one or more additives selected from the group consisting of sodium alginate, sorbitol, milk proteins, whey, and milk powder are present in an amount of up to 40wt%, such as up 35 to wt%, or up to 20 wt%.

5. The decoration of any preceding claim:
i) wherein the substrate further comprises one or more edible and food compliant thickening agents, adhesion promoters, fixing aids, polymers, and/or flavours; and/or
ii) wherein the decoration complies with FDA regulation CFR Part 21 and the corresponding EU food regulation EC 1333/2008; and/or
iii) further comprising a support medium, wherein the substrate is disposed on the support medium; optionally wherein the support medium is selected from the group consisting of paper, plastic, card stock, and metal; and/or
iv) wherein the edible image is obtained from an edible ink; optionally wherein the edible ink comprises water, a humectant, and food colouring; and/or
v) wherein the substrate is obtained from a water-soluble, edible, liquid primer; optionally wherein the liquid primer comprises 60 to 95wt% water, such as 70 to 95wt% water, 80 to 95wt% water, or 88 to 95wt% water; and/or
vi) wherein the substrate further comprises one or more preservatives.

6. A method for providing a decoration for a foodstuff or beverage or a method for decorating a foodstuff or beverage, comprising steps:
a. applying a water-soluble, edible, liquid primer onto a temporary support medium;
b. drying the primer on the support medium to afford the substrate as defined in any of the preceding claims;
c. disposing an edible image onto the substrate; and
d. drying the printed edible image to afford the decoration of any preceding claim.

7. The method of claim 6, further comprising step:
e. removing the substrate from the support medium and decorating a foodstuff or beverage by applying the printed image and substrate to the surface of the foodstuff or beverage.

8. A method for decorating a foodstuff or beverage, comprising steps:
a. applying a water-soluble, edible, liquid primer onto a temporary support medium;
b. drying the primer on the support medium to afford a water-soluble substrate; wherein the substrate has a water solubility of at least 70%, wherein water solubility is measured at 20 °C;
c. disposing an edible image onto the substrate; and
d. drying the printed edible image to afford a decoration; and
e. removing the substrate from the support medium and decorating a foodstuff or beverage by applying the printed image and substrate to the surface of the foodstuff or beverage.

9. The method of claims 7 or 8:
i) further comprising step:
f. exposing the foodstuff to water and/or humidity to assist the substrate to adhere to the foodstuff; and/or
ii) wherein the decoration is applied to the surface of a foodstuff by a technique selected from the group consisting of wetting the decoration with water prior to application, applying an edible adhesive to the decoration prior to application, and combinations thereof; optionally wherein the edible adhesive is the same liquid primer used to make the decoration; and/or
iii) step e) is performed at a temperature of 10 to 30 °C, such as at 20 °C, and at a relative humidity of 20% to 70%, such as 40% relative humidity; and/or
iv) the foodstuff is selected from the group consisting of meats, baked goods, dairy products, and confectionary.

10. The method of any of claims 7 to 9, wherein the foodstuff is frozen.

11. The method of any of claims 7 to 8, wherein the beverage is selected from the group consisting of beer, lager, coffee, soft drinks, dairy-type beverages, hot drinks, and combinations thereof.

12. The method of any preceding claim, wherein the method of disposing the edible ink onto the primer is selected from the group consisting of inkjet printing, screen printing, offset printing, and thermal transfer; optionally wherein the method of disposing the edible ink onto the primer is inkjet printing.

13. The method of any of claims 7 to 10 or 12, wherein the foodstuff contains sufficient moisture to enable the edible film to be absorbed naturally, without the need for the additional water and/or humidity of optional step f.

14. The method of any of claims 9 to 10 or 12, wherein the water and/or humidity of step f is water vapor harvested during a baking process used to make the foodstuff; and the step of adhering to the foodstuff comprises the substrate penetrating into the foodstuff.

15. The method of any of claims 6 to 14, wherein:
i) drying the primer is performed at a temperature of 20 to 50 °C, such as 30 to 40 °C, or 30 to 35 °C; and/or
ii) drying the primer is performed for 1 to 6 hours, such as 2 to 5 hours, or 3 to 4 hours; and/or
iii) between steps b) and c), the method further comprises the step of printing a base white ink or edible gold leaf onto the substrate.

## Patentansprüche

1. Dekoration für Lebensmittel, umfassend:
a) ein essbares Substrat;
b) ein essbares Bild, das auf dem essbaren Substrat angeordnet ist;
wobei das essbare Substrat ein Material ausgewählt aus der Gruppe bestehend aus Pektin, Zitronensäure, Zitronensäureestern, Pflanzenöl, Kollagen und Kombinationen davon umfasst; wobei das Material in dem Substrat in einer Menge von wenigstens 50 Gew.-% bezogen auf das Gesamtgewicht der Nichtwasserkomponenten des Substrats vorhanden ist; wobei das Substrat eine Wasserlöslichkeit von wenigstens 70 % aufweist, wobei Wasserlöslichkeit bei 20 °C gemessen wird.

2. Dekoration nach einem der vorstehenden Ansprüche, wobei das Substrat eine Wasserlöslichkeit von wenigstens 90 % oder 100 % aufweist, wobei Wasserlöslichkeit bei 20 °C gemessen wird.

3. Dekoration nach einem der vorstehenden Ansprüche, wobei:
i) das Substrat ein Material ausgewählt aus der Gruppe bestehend aus Pektin, Gelatine, Zitronensäure, Zitronensäureestern, Kokosöl und Kombinationen davon umfasst, wobei das Material ausgewählt aus der Gruppe bestehend aus Pektin, Gelatine, Zitronensäure, Zitronensäureestern, Kokosöl und Kombinationen davon in einer Menge von wenigstens 50 Gew.-%, wie z.B. 50 bis 95 Gew.-%, bezogen auf das Gesamtgewicht der Nichtwasserkomponenten des Substrats vorhanden ist; und/oder
ii) das Substrat ein Material ausgewählt aus der Gruppe bestehend aus Pektin, Zitronensäure und Kombinationen davon umfasst; wobei das Material ausgewählt aus der Gruppe bestehend aus Pektin, Zitronensäure und Kombinationen in dem Substrat in einer Menge von wenigstens 50 Gew.-%, wie z.B. 50 bis 95 Gew.-%, bezogen auf das Gesamtgewicht der Nichtwasserkomponenten des Substrats, wie z.B. wenigstens 53 Gew.-% oder wenigstens 60 Gew.-% bezogen auf das Gesamtgewicht der Nichtwasserkomponenten des Substrats, vorhanden ist; und/oder
iii) das Substrat ein Material ausgewählt aus der Gruppe bestehend aus Pektin, Kokosöl, Zitronensäure und Kombinationen umfasst; wobei das Material ausgewählt aus der Gruppe bestehend aus Pektin, Kokosöl, Zitronensäure und Kombinationen davon in dem Substrat in einer Menge von wenigstens 50 Gew.-%, wie z.B. 50 bis 95 Gew.-%, bezogen auf das Gesamtgewicht der Nichtwasserkomponenten des Substrats, wie z.B. wenigstens 58 Gew.-% oder wenigstens 60 Gew.-% bezogen auf das Gesamtgewicht der Nichtwasserkomponenten des Substrats, vorhanden ist.

4. Dekoration nach einem der vorstehenden Ansprüche, wobei:
i) das Substrat Pektin und gegebenenfalls eines oder mehrere der anderen in den vorstehenden Ansprüchen genannten Materialien umfasst; wobei das Pektin gegebenenfalls von Zitronenschalen abgeleitet ist; und/oder
ii) Pektin in dem Substrat in einer Menge von wenigstens 20 Gew.-%, wie z.B. 20 bis 90 Gew.-%, bezogen auf die Gesamtmenge der Nichtwasserkomponenten des Substrats, wie z.B. wenigstens 30 Gew.-% oder wenigstens 39 Gew.-% oder wenigstens 50 Gew.-% bezogen auf die Gesamtmenge der Nichtwasserkomponenten des Substrats, vorhanden ist; und/oder
iii) das Substrat weniger als oder gleich 40 Gew.-% Naturgummi, wie z.B. weniger als oder gleich 30 Gew.-%, weniger als oder gleich 26 Gew.-% oder weniger als oder gleich 15 Gew.-% Naturgummi, bezogen auf das Gesamtgewicht der Nichtwasserkomponenten des Substrats umfasst; und/oder
iv) das Substrat weniger als oder gleich 20 Gew.-% Pigment, wie z.B. weniger als oder gleich 10 Gew.-% oder weniger als oder gleich 3 Gew.-% Pigment, bezogen auf das Gesamtgewicht der Nichtwasserkomponenten des Substrats umfasst; und/oder
v) das Substrat im Wesentlichen frei von Pigment ist; und/oder
vi) das Substrat weniger als oder gleich 10 Gew.-% Cellulose, wie z.B. weniger als oder gleich 5 Gew.-% oder weniger als oder gleich 3 Gew.-% Cellulose, bezogen auf das Gesamtgewicht der Nichtwasserkomponenten des Substrats umfasst; wobei das Substrat gegebenenfalls im Wesentlichen frei von Cellulose ist; und/oder
vii) das Substrat einen oder mehrere Zusatzstoffe ausgewählt aus der Gruppe bestehend aus Natriumalginat, Sorbit, Milchproteinen, Molke und Milchpulver umfasst; wobei der eine oder die mehreren Zusatzstoffe ausgewählt aus der Gruppe bestehend aus Natriumalginat, Sorbit, Milchproteinen, Molke und Milchpulver gegebenenfalls in einer Menge von bis zu 40 Gew.-%, wie z.B. bis zu 35 bis Gew.-% oder bis zu 20 Gew.-%, vorhanden sind.

5. Dekoration nach einem der vorstehenden Ansprüche:
i) wobei das Substrat ferner ein oder mehrere essbare und lebensmittelgeeignete Verdickungsmittel, Haftvermittler, Fixierhilfen, Polymere und/oder Aromen umfasst; und/oder
ii) wobei die Dekoration der FDA-Verordnung CFR Teil 21 und der entsprechenden EU-Lebensmittelverordnung EG 1333/2008 entspricht; und/oder
iii) ferner umfassend ein Trägermedium, wobei das Substrat auf dem Trägermedium angeordnet ist; wobei das Trägermedium gegebenenfalls ausgewählt ist aus der Gruppe bestehend aus Papier, Kunststoff, Karton und Metall; und/oder
iv) wobei das essbare Bild aus einer essbaren Tinte erhalten ist; wobei die essbare Tinte gegebenenfalls Wasser, ein Feuchthaltemittel und Lebensmittelfarbe umfasst; und/oder
v) wobei das Substrat aus einer wasserlöslichen, essbaren, flüssigen Grundierung erhalten ist; wobei die flüssige Grundierung gegebenenfalls 60 bis 95 Gew.-% Wasser, wie z.B. 70 bis 95 Gew.-% Wasser, 80 bis 95 Gew.-% Wasser oder 88 bis 95 Gew.-% Wasser umfasst; und/oder vi) wobei das Substrat ferner ein oder mehrere Konservierungsmittel umfasst.

6. Verfahren zur Bereitstellung einer Dekoration für ein Lebensmittel oder Getränk oder Verfahren zum Dekorieren eines Lebensmittels oder Getränks, umfassend Schritte:
a. Aufbringen einer wasserlöslichen, essbaren, flüssigen Grundierung auf ein temporäres Trägermedium;
b. Trocknen der Grundierung auf dem Trägermedium, um das Substrat nach einem der vorstehenden Ansprüche zu erhalten;
c. Anordnen eines essbaren Bilds auf dem Substrat; und
d. Trocknen des gedruckten essbaren Bilds, um die Dekoration nach einem der vorstehenden Ansprüche zu erhalten.

7. Verfahren nach Anspruch 6, ferner umfassend Schritt:
e. Entfernen des Substrats von dem Trägermedium und Dekorieren eines Lebensmittels oder Getränks durch Aufbringen des gedruckten Bilds und des Substrats auf die Oberfläche des Lebensmittels oder Getränks.

8. Verfahren zum Dekorieren eines Lebensmittels oder Getränks, umfassend Schritte:
a. Aufbringen einer wasserlöslichen, essbaren, flüssigen Grundierung auf ein temporäres Trägermedium;
b. Trocknen der Grundierung auf dem Trägermedium, um ein wasserlösliches Substrat zu erhalten; wobei das Substrat eine Wasserlöslichkeit von wenigstens 70 % aufweist, wobei Wasserlöslichkeit bei 20 °C gemessen wird;
c. Anordnen eines essbaren Bilds auf dem Substrat; und
d. Trocknen des gedruckten essbaren Bilds, um eine Dekoration zu erhalten; und
e. Entfernen des Substrats von dem Trägermedium und Dekorieren eines Lebensmittels oder Getränks durch Aufbringen des gedruckten Bilds und des Substrats auf die Oberfläche des Lebensmittels oder Getränks.

9. Verfahren nach Anspruch 7 oder 8:
i) ferner umfassend Schritt:
f. Exponieren des Lebensmittels gegenüber Wasser und/oder Feuchtigkeit, um Haften des Substrats an dem Lebensmittel zu unterstützen; und/oder
ii) wobei die Dekoration durch ein Verfahren ausgewählt aus der Gruppe bestehend aus Benetzen der Dekoration mit Wasser vor dem Aufbringen, Aufbringen eines essbaren Klebstoffs auf die Dekoration vor dem Aufbringen und Kombinationen davon auf die Oberfläche eines Lebensmittels aufgebracht wird; wobei der essbare Klebstoff gegebenenfalls die gleiche flüssige Grundierung, die zum Herstellen der Dekoration verwendet wird, ist; und/oder
iii) Schritt e) bei einer Temperatur von 10 bis 30 °C, wie z.B. bei 20 °C, und bei einer relativen Feuchtigkeit von 20 % bis 70 %, wie z.B. 40 % relative Feuchtigkeit, durchgeführt wird; und/oder
iv) das Lebensmittel ausgewählt ist aus der Gruppe bestehend aus Fleischwaren, Backwaren, Milchprodukten und Süßwaren.

10. Verfahren nach einem der Ansprüche 7 bis 9, wobei das Lebensmittel gefroren ist.

11. Verfahren nach einem der Ansprüche 7 bis 8, wobei das Getränk ausgewählt ist aus der Gruppe bestehend aus Bier, Lager, Kaffee, Softdrinks, Getränken vom Milchtyp, Heißgetränken und Kombinationen davon.

12. Verfahren nach einem der vorstehenden Ansprüche, wobei das Verfahren zum Aufbringen der essbaren Tinte auf der Grundierung ausgewählt ist aus der Gruppe bestehend aus Tintenstrahldruck, Siebdruck, Offsetdruck und Thermotransfer; wobei das Verfahren zum Aufbringen der essbaren Tinte auf der Grundierung gegebenenfalls Tintenstrahldruck ist.

13. Verfahren nach einem der Ansprüche 7 bis 10 oder 12, wobei das Lebensmittel ausreichend Feuchtigkeit enthält, um zu ermöglichen, dass der essbare Film natürlich absorbiert wird, ohne dass das zusätzliche Wasser und/oder die Feuchtigkeit des optionalen Schritts f erforderlich ist.

14. Verfahren nach einem der Ansprüche 9 bis 10 oder 12, wobei das Wasser und/oder die Feuchtigkeit von Schritt f Wasserdampf ist, der während eines zur Herstellung des Lebensmittels verwendeten Backverfahrens gewonnen wird; und der Schritt des Anhaftens an das Lebensmittel umfasst, dass das Substrat in das Lebensmittel eindringt.

15. Verfahren nach einem der Ansprüche 6 bis 14, wobei:
i) Trocknen der Grundierung bei einer Temperatur von 20 bis 50 °C, wie z.B. 30 bis 40 °C oder 30 bis 35 °C, durchgeführt wird; und/oder
ii) Trocknen der Grundierung für 1 bis 6 Stunden, wie z.B. 2 bis 5 Stunden oder 3 bis 4 Stunden, durchgeführt wird; und/oder
iii) das Verfahren zwischen den Schritten b) und c) ferner den Schritt des Druckens einer weißen Grundfarbe oder eines essbaren Goldblatts auf das Substrat umfasst.

## Revendications

1. Décoration pour denrées alimentaires comprenant :
a) un substrat comestible ;
b) une image comestible disposée sur le substrat comestible ;
dans laquelle le substrat comestible comprend une matière choisie dans le groupe constitué par la pectine, l'acide citrique, les esters d'acide citrique, l'huile végétale, le collagène, et des combinaisons de ceux-ci ; dans laquelle ledit matériau est présent dans le substrat en une quantité d'au moins 50 % en poids par rapport au poids total des composants non aqueux du substrat ; dans laquelle le substrat a une solubilité dans l'eau d'au moins 70 %, dans laquelle la solubilité dans l'eau est mesurée à 20 °C.

2. Décoration selon l'une quelconque des revendications précédentes, dans laquelle le substrat a une solubilité dans l'eau d'au moins 90 % ou 100 %, la solubilité dans l'eau étant mesurée à 20 °C.

3. Décoration selon une quelconque revendication précédente, dans laquelle :
i) le substrat comprend une matière choisie dans le groupe constitué par la pectine, la gélatine, l'acide citrique, les esters d'acide citrique, l'huile de noix de coco, et des combinaisons de ceux-ci, dans laquelle la matière choisie dans le groupe constitué par la pectine, la gélatine, l'acide citrique, les esters d'acide citrique, l'huile de noix de coco, et leurs combinaisons est présente en une quantité d'au moins 50 % en poids, telle que de 50 à 95 % en poids, par rapport au poids total des composants non aqueux du substrat ; et/ou
ii) le substrat comprend une matière choisie dans le groupe constitué par la pectine, l'acide citrique et leurs combinaisons ; dans laquelle la matière choisie dans le groupe constitué par la pectine, l'acide citrique et leurs combinaisons est présente dans le substrat en une quantité d'au moins 50 % en poids, telle que 50 à 95 % en poids, par rapport au poids total des composants non aqueux du substrat, telle qu'au moins 53 % en poids, ou au moins 60 % en poids, par rapport au poids total des composants non aqueux du substrat ; et/ou
iii) le substrat comprend une matière choisie dans le groupe constitué par la pectine, l'huile de noix de coco, l'acide citrique et leurs combinaisons ; dans laquelle la matière choisie dans le groupe constitué par la pectine, l'huile de noix de coco, l'acide citrique et leurs combinaisons est présente dans le substrat en une quantité d'au moins 50 % en poids, telle que 50 à 95 % en poids, par rapport au poids total des composants non aqueux du substrat, telle qu'au moins 58 % en poids, ou au moins 60 % en poids, par rapport au poids total des composants non aqueux du substrat.

4. Décoration selon une quelconque revendication précédente, dans laquelle :
i) le substrat comprend une pectine et éventuellement une ou plusieurs des autres matières citées dans les revendications précédentes ; éventuellement dans laquelle la pectine est dérivée de zestes de citron ; et/ou
ii) la pectine est présente dans le substrat en une quantité d'au moins 20 % en poids, telle que 20 à 90 % en poids, par rapport à la quantité totale des composants non aqueux du substrat, telle qu'au moins 30 % en poids, ou au moins 39 % en poids, ou au moins 50 % en poids, par rapport à la quantité totale des composants non aqueux du substrat ; et/ou
iii) le substrat comprend une quantité inférieure ou égale à 40 % en poids de gomme naturelle, telle qu'une quantité inférieure ou égale à 30 % en poids, inférieure ou égale à 26 % en poids ou inférieure ou égale à 15 % en poids de gomme naturelle, par rapport au poids total des composants non aqueux du substrat ; et/ou
iv) le substrat comprend une quantité inférieure ou égale à 20 % en poids de pigment, telle qu'une quantité inférieure ou égale à 10 % en poids, ou inférieure ou égale à 3 % en poids, de pigment par rapport au poids total des composants non aqueux du substrat ; et/ou
v) le substrat est sensiblement exempt de pigment ; et/ou
vi) le substrat comprend une quantité inférieure ou égale à 10 % en poids de cellulose, telle qu'une quantité inférieure ou égale à 5 % en poids, ou inférieure ou égale à 3 % en poids de cellulose, par rapport au poids total des composants non aqueux du substrat ; éventuellement dans laquelle le substrat est sensiblement exempt de cellulose ; et/ou
vii) le substrat comprend un ou plusieurs additifs choisis dans le groupe constitué par l'alginate de sodium, le sorbitol, les protéines du lait, le lactosérum et le lait en poudre ; éventuellement dans laquelle l'additif ou les additifs choisis dans le groupe constitué par l'alginate de sodium, le sorbitol, les protéines de lait, le lactosérum et le lait en poudre sont présents en une quantité allant jusqu'à 40 % en poids, telle que jusqu'à 35 % en poids, ou jusqu'à 20 % en poids.

5. Décoration selon une quelconque revendication précédente :
i) dans laquelle le substrat comprend en outre un ou plusieurs agents épaississants, promoteurs d'adhérence, auxiliaires de fixation, polymères et/ou arômes comestibles et conformes aux normes alimentaires ; et/ou
ii) dans laquelle la décoration est conforme à la réglementation CFR titre 21 de la FDA et à la réglementation alimentaire européenne correspondante EC 1333/2008, et/ou
iii) comprenant en outre un milieu de support, dans laquelle le substrat est disposé sur le milieu de support ; éventuellement dans laquelle le milieu de support est choisi dans le groupe constitué par le papier, une matière plastique, le papier cartonné et le métal ; et/ou
iv) dans laquelle l'image comestible est obtenue à partir d'une encre comestible ; éventuellement dans laquelle l'encre comestible comprend de l'eau, un humectant et un colorant alimentaire ; et/ou
v) dans laquelle le substrat est obtenu à partir d'un apprêt liquide comestible soluble dans l'eau ; éventuellement dans laquelle l'apprêt liquide comprend 60 à 95 % en poids d'eau, tel que 70 à 95 % en poids d'eau, 80 à 95 % en poids d'eau, ou 88 à 95 % en poids d'eau ; et/ou
vi) dans laquelle le substrat comprend en outre un ou plusieurs conservateurs.

6. Procédé de fourniture d'une décoration pour un produit alimentaire ou une boisson ou procédé de décoration d'un produit alimentaire ou d'une boisson, comprenant les étapes :
a. application d'un apprêt liquide comestible soluble dans l'eau sur un milieu de support temporaire ;
b. séchage de l'apprêt sur le milieu de support pour obtenir le substrat tel que défini dans l'une quelconque des revendications précédentes ;
c. disposition d'une image comestible sur le substrat ; et
d. séchage de l'image comestible imprimée pour obtenir la décoration selon l'une quelconque des revendications précédentes.

7. Procédé selon la revendication 6, comprenant en outre l'étape :
e. retrait du substrat du milieu de support et décoration d'un produit alimentaire ou d'une boisson par application de l'image imprimée et du substrat sur la surface du produit alimentaire ou de la boisson.

8. Procédé de décoration d'un produit alimentaire ou d'une boisson, comprenant les étapes :
a. application d'un apprêt liquide comestible soluble dans l'eau sur un milieu de support temporaire ;
b. séchage de l'apprêt sur le milieu de support pour obtenir un substrat soluble dans l'eau ; dans lequel le substrat a une solubilité dans l'eau d'au moins 70 %, la solubilité dans l'eau étant mesurée à 20 °C ;
c. disposition d'une image comestible sur le substrat ; et
d. séchage de l'image comestible imprimée pour obtenir une décoration ; et
e. retrait du substrat du milieu de support et décoration d'un produit alimentaire ou d'une boisson par application de l'image imprimée et du substrat sur la surface du produit alimentaire ou de la boisson.

9. Procédé selon les revendications 7 ou 8 :
i) comprenant en outre l'étape :
f. exposition du produit alimentaire à de l'eau et/ou à de l'humidité pour aider le substrat à adhérer au produit alimentaire ; et/ou
ii) dans lequel la décoration est appliquée sur la surface d'un produit alimentaire par une technique choisie dans le groupe constitué par le mouillage de la décoration avec de l'eau avant l'application, l'application d'un adhésif comestible sur la décoration avant l'application, et des combinaisons de celles-ci ; éventuellement dans lequel l'adhésif comestible est le même apprêt liquide que celui utilisé pour faire la décoration ; et/ou
iii) l'étape e) est réalisée à une température de 10 à 30 °C, telle qu'à 20 °C, et à une humidité relative de 20 à 70 %, telle qu'à 40 % d'humidité relative ; et/ou
iv) le produit alimentaire est choisi dans le groupe constitué par les viandes, les produits de boulangerie, les produits laitiers et les confiseries.

10. Procédé selon l'une quelconque des revendications 7 à 9, le produit alimentaire étant congelé.

11. Procédé selon l'une quelconque des revendications 7 à 8, dans lequel la boisson est choisie dans le groupe constitué par la bière, la bière blonde, le café, les boissons gazeuses, les boissons de type laitier, les boissons chaudes et leurs combinaisons.

12. Procédé selon l'une quelconque des revendications précédentes, dans lequel le procédé de disposition de l'encre comestible sur l'apprêt est choisi dans le groupe constitué par l'impression à jet d'encre, la sérigraphie, l'impression offset et le transfert thermique ; éventuellement dans lequel le procédé de disposition de l'encre comestible sur l'apprêt est une impression à jet d'encre.

13. Procédé selon l'une quelconque des revendications 7 à 10 ou 12, dans lequel le produit alimentaire contient suffisamment d'humidité pour permettre au film comestible d'être absorbé naturellement, sans avoir besoin de l'eau et/ou de l'humidité supplémentaires de l'étape éventuelle f.

14. Procédé selon l'une quelconque des revendications 9 à 10 ou 12, dans lequel l'eau et/ou l'humidité de l'étape f est de la vapeur d'eau récoltée pendant un processus de cuisson utilisé pour fabriquer le produit alimentaire ; et l'étape d'adhérence au produit alimentaire comprend la pénétration du substrat dans le produit alimentaire.

15. Procédé selon l'une quelconque des revendications 6 à 14, dans lequel :
i) le séchage de l'apprêt est effectué à une température de 20 à 50 °C, telle que de 30 à 40 °C, ou de 30 à 35 °C ; et/ou
ii) le séchage de l'apprêt est effectué pendant 1 à 6 heures, tel que 2 à 5 heures, ou 3 à 4 heures ; et/ou
iii) entre les étapes b) et c), le procédé comprend en outre l'étape d'impression d'une encre blanche de base ou une feuille d'or comestible sur le substrat.
